# EUROPEAN PATENT APPLICATION

(11) **EP 4 681 954 A1**
(43) Date of publication of application: **21.01.2026**
(21) Application number: 25189830.0
(22) Date of filing: 16.07.2025
(51) Int. Cl.: B60K 26/02

(54) **WORK VEHICLE**

(30) Priority: 17.07.2024 JP 2024113908
(71) Applicant: ISEKI & CO., LTD., Matsuyama-shi Ehime-ken 799-2692 (JP)
(72) Inventor: SHIMIZU, Takahiro, Ehime-ken, 799-2692 (JP); TOMIOKA, Eiji, Ehime-ken, 799-2692 (JP)
(74) Representative: TBK

(57) **Abstract**

[Problem] Provided is a work vehicle capable of reducing fatigue of a lower body of an operator by suppressing vibration to be transmitted to a pedal of an accelerator pedal.

[Solution] In a work vehicle in which an accelerator pedal (21) operating a traveling speed is provided in an operator's station (6), the accelerator pedal (21) includes an arm portion (30) and a pedal portion (34) to be depressed by an operator, one end of the arm portion (30) is connected to a rotary shaft (26) of a transmission case (25), and an other end of the arm portion (30) and the pedal portion (34) are connected to each other via a damper (32).

## Description

### TECHNICAL FIELD

The present invention relates to a work vehicle in which an accelerator pedal for increasing and decreasing a traveling speed is provided on a floor of an operator's station.

### BACKGROUND ART

A technique is known in which an accelerator pedal is provided on a right side of a steering column of an operator's station, the accelerator pedal being depressed by an operator seated in the operator's station to increase or decrease a traveling speed (Patent Document 1).

### PRIOR ART DOCUMENT

### PATENT DOCUMENT

Patent Document 1: Japanese Unexamined Patent Application Publication No. 2002-295634

### SUMMARY OF INVENTION

### TECHNICAL PROBLEM

However, with the means of Patent Document 1, vibration of an engine is transmitted via a transmission case to a pedal portion of the accelerator pedal on which the operator performs a depressing operation, and therefore, when the operator operates the accelerator pedal for a long time, there is a problem in that fatigue of a lower body of the operator, particularly the right leg, increases.

Therefore, a main object of the present invention is to provide a work vehicle that is capable of reducing fatigue of a lower body of an operator by suppressing vibration transmitted to a pedal portion of an accelerator pedal.

### SOLUTION TO PROBLEM

The present invention which has solved the above problem is as follows. In this work vehicle provided with an accelerator pedal (21) for operating a traveling speed in an operator's station (6), the accelerator pedal (21) includes an arm portion (30) and a pedal portion (34) to be depressed by an operator, one end of the arm portion (30) is connected to a rotary shaft (26), and an other end of the arm portion (30) and the pedal portion (34) are connected via a damper (32).

### ADVANTAGEOUS EFFECTS OF INVENTION

According to the present invention, vibration of an engine transmitted to the pedal (34) can be reduced, and fatigue of the operator can be reduced.

### BRIEF DESCRIPTION OF DRAWINGS

FIG. 1 is a left side view of a work vehicle.
FIG. 2 is a plan view of the work vehicle.
FIG. 3 is a front view of the work vehicle.
FIG. 4 is an explanatory view of an accelerator pedal and a transmission case.
FIG. 5 is a perspective view of a forward travel accelerator pedal according to an embodiment as viewed from a front upper side.
FIG. 6 is a front view of the forward travel accelerator pedal according to the embodiment.
FIG. 7 is a right side view of the forward travel accelerator pedal according to the embodiment.
FIG. 8 is a perspective view of a damper according to the embodiment as viewed from a front right side.
FIG. 9 is a perspective view of the forward travel accelerator pedal according to the embodiment as viewed from a front lower side.
FIG. 10 is a bottom view of the forward travel accelerator pedal according to the embodiment.

### DESCRIPTION OF EMBODIMENTS

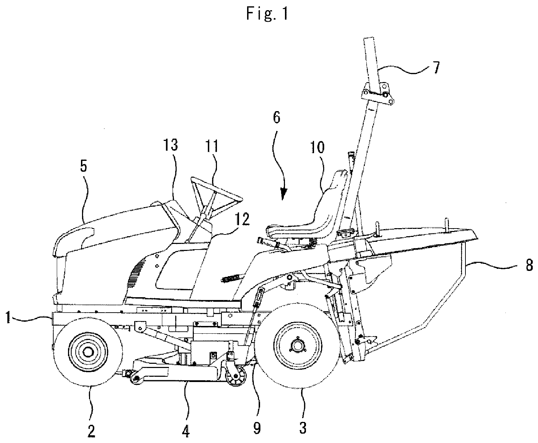

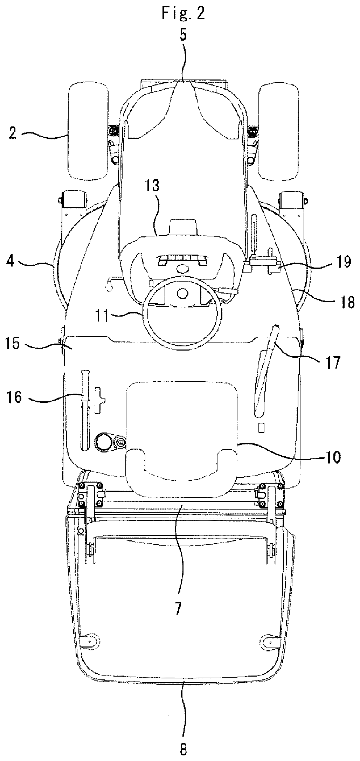

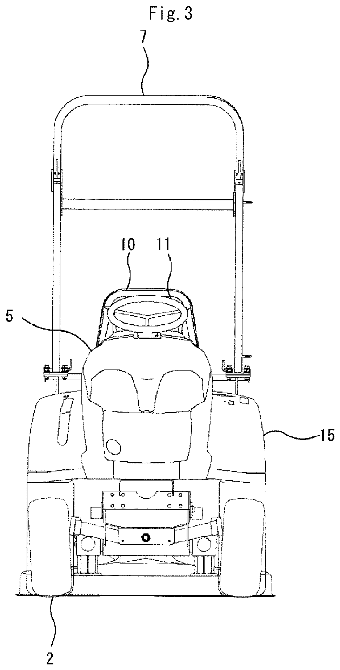

As illustrated in FIGS. 1 to 3, in a work vehicle such as a tractor, a pair of left and right front wheels 2 are provided at a front portion on a lower side of a machine body frame 1, a pair of left and right rear wheels 3 are provided at a rear portion on the lower side of the machine body frame 1, and a work machine 4 for mowing lawn or the like is provided between the front wheels 2 and the rear wheels 3 on the lower side of the machine body frame 1.

A hood 5 for storing an engine is provided at a front portion on an upper side of the machine body frame 1, an operator's station 6 in which an operator is seated is provided at a rear portion of the hood 5, a safety frame 7 for protecting the operator is provided on a rear side of the operator's station 6, and a grass collection container 8 for storing lawn grass or the like mowed by a work machine 4 is provided on a rear lower side of the safety frame 7. Further, a rear portion of the work machine 4 and a front portion of the grass collection container 8 communicate with each other through a chute 9.

A steering wheel 11 is provided on the front side of an operator's seat 10 of the operator's station 6, and the steering wheel 11 is supported by a steering column 12 via a steering shaft (not illustrated). A panel dash 13 is formed on an upper portion of the steering column 12.

A fender 15 located on a left side of the operator's seat 10 is provided with a cleaner lever 16 for driving a cleaner (not illustrated) for forcibly conveying the mown grass, which is mowed by the work machine 4, to the grass collection container 8, and the fender 15 located on the right side is provided with a lifting lever 17 for lifting the work machine 4.

An accelerator pedal 19 for moving the work vehicle forward and backward is provided on a floor 18 located on the right side of the steering column 12.

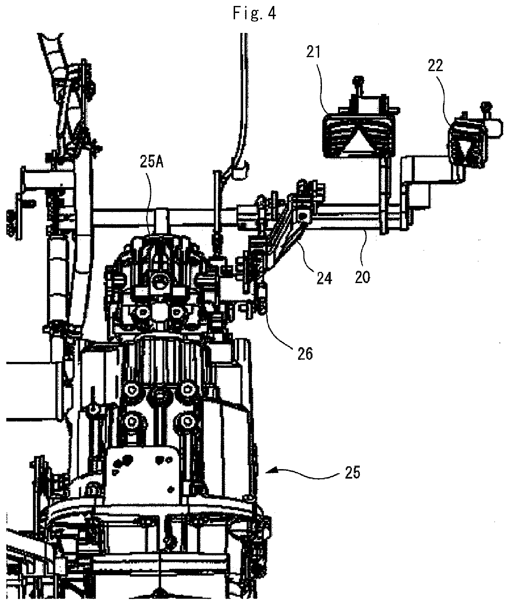

As illustrated in FIG. 4, the accelerator pedal 19 is formed of a forward travel accelerator pedal 21 for moving the work vehicle forward, and a reverse travel accelerator pedal 22 for moving the work vehicle in reverse, which are supported by a support shaft 20 extending in a lateral direction.

When the operator depresses the forward travel accelerator pedal 21, a trunnion shaft (rotary shaft) 26 that operates a pump in a continuously variable transmission 25A disposed in a front portion of the transmission case rotates in a clockwise direction via an arm 24 connected to the support shaft 20, whereby a forward travel speed of the work vehicle can be increased. When the operator depresses the reverse travel accelerator pedal 22, the trunnion shaft 26 is rotated in a counterclockwise direction via the arm 24, thereby enabling to increase a reverse travel speed of the work vehicle. When the operator does not depress both the forward travel accelerator pedal 21 and the reverse travel accelerator pedal 22, the work vehicle is in a neutral state and does not move forward or backward.

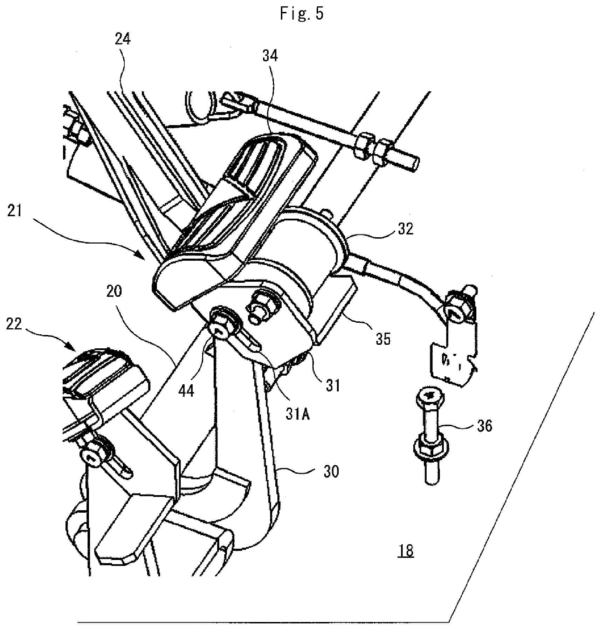

As illustrated in FIGS. 5 to 7, the forward travel accelerator pedal 21 includes an arm portion 30 having a lower portion fixed to the support shaft 20 and extending forward and upward, and a damper plate 31 swingably fixed to a right surface of an upper portion of the arm portion 30 and mounting a damper such as a rubber vibration isolator, a damper 32 fixed to a left surface of the damper plate 31 and extending in the lateral direction, a pedal arm 33 having a lower portion fixed to a left surface of the damper 32 and extending rearward and upward, and a pedal portion 34 fixed to an upper portion of the pedal arm 33 and depressed by an operator. Thus, the vibration of the engine or the like transmitted to the pedal portion 34 via the continuously variable transmission 25A or the like can be reduced.

Further, a stopper plate 35 extending leftward below the damper 32 is provided on a lower portion of the damper plate 31, and a stopper pin 36 which comes into contact with a lower surface of the stopper plate 35 is erected on the floor 18. As a result, it is possible to prevent the pedal portion 34 from being excessively depressed and the forward travel speed from being rapidly accelerated.

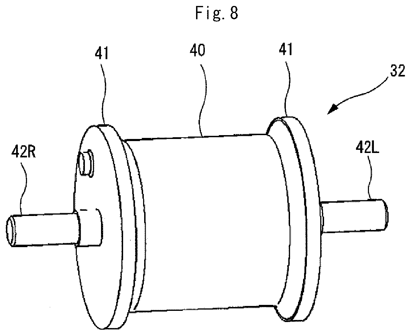

As illustrated in FIG. 8, the damper 32 is formed by a damper main body 40 formed in a cylindrical shape, and circular flanges 41 made of metal on both sides of the damper main body 40. Further, a left stud bolt 42L extending leftward is provided at the center of the flange 41 on the left side, and a right stud bolt 42R extending rightward is provided at the center of the flange 41 on the right side.

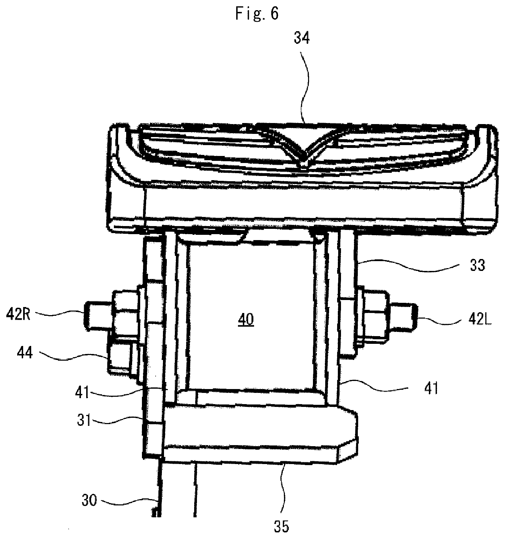

As illustrated in FIG. 6, a lower portion of the pedal arm 33 is fixed to the left stud bolt 42L. A predetermined gap is provided between a lower surface of the pedal portion 34 and the flange 41.

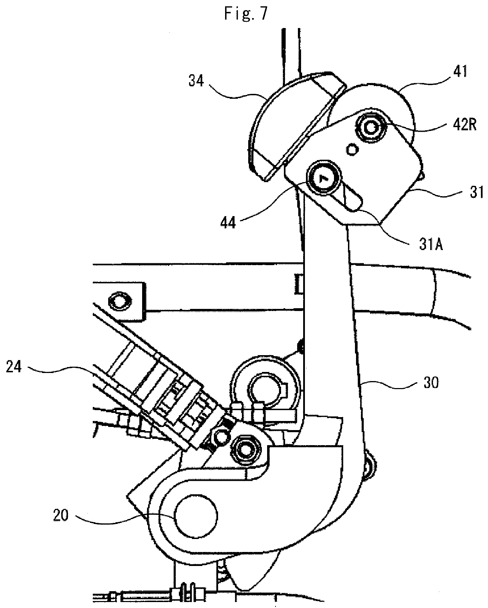

As illustrated in FIG. 7, the right stud bolt 42R is fixed to a front upper portion of the damper plate 31. As viewed from an axial center of the right stud bolt 42R, an elongated hole (adjustment mechanism) 31A extending in a circumferential direction is formed in a rear portion of the damper plate 31 at a predetermined distance radially from the right stud bolt 42R.

The rear portion of the damper plate 31 is swingably fixed to an upper portion of the arm portion 30 by a connecting member 44 such as a bolt inserted into the elongated hole 31A. Accordingly, the operator can easily change an inclination angle of the pedal portion 34 to an angle suitable for his or her body shape by loosening the connecting member 44 and swinging the damper plate 31.

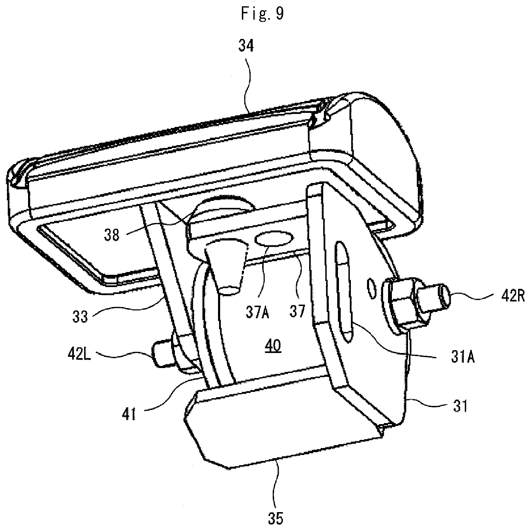

As illustrated in FIG. 9, a plate 37 extending leftward below the pedal portion 34 is provided on an upper portion of the damper plate 31. Mounting holes 37A are opened in the plate 37 at predetermined intervals in the lateral direction, and a rubber elastic member 38 extending in a vertical direction is inserted into the left-side mounting hole 37A. A height of the portion of the elastic member 38 extending upward from the upper surface of the plate 37 is set to a height at which the elastic member 38 comes into contact with the lower surface of the pedal portion 34 and prevents contact between the lower surface of the pedal portion 34 and the flange 41 when the operator strongly depresses the pedal portion 34. Thus, even when the operator strongly depresses the pedal portion 34, the contact between the lower surface of the pedal portion 34 and the flange 41 of the damper 32 can be prevented, and the vibration of the engine or the like transmitted to the pedal portion 34 via the continuously variable transmission 25A or the like can be reliably reduced.

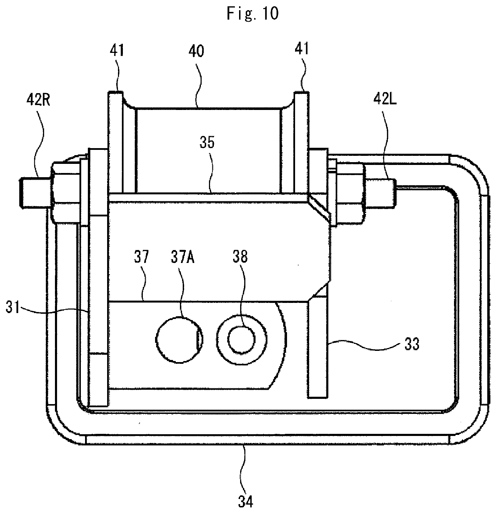

As illustrated in FIG. 10, the damper main body 40 is disposed so as to overlap the pedal portion 34. Thus, when the operator depresses the pedal portion 34, it is possible to suppress the occurrence of large bending or twisting in the damper main body 40, and it is possible to prevent early performance deterioration of the damper main body 40. Further, the damper main body 40 is biased to the left side from the center of the pedal portion 34 in the lateral direction. Thus, it is possible to further reduce the vibration of the engine or the like transmitted to the pedal portion 34 via the continuously variable transmission 25A or the like.

## Claims

1. A work vehicle comprising an accelerator pedal (21) that operates a traveling speed and that is provided in an operator's station (6), wherein
the accelerator pedal (21) includes an arm portion (30) and a pedal portion (34) to be depressed by an operator, and
one end of the arm portion (30) is connected to a rotary shaft (26), and an other end of the arm portion (30) and a pedal portion (34) are connected via a damper (32).

2. The work vehicle according to claim 1, wherein
the damper (32) is provided in an orientation having a longitudinal direction thereof in a lateral direction, and the arm portion (30) is connected to one of left and right sides of the damper (32) and the pedal portion (34) is connected to an other of the left and right sides of the damper (32).

3. The work vehicle according to claim 2, wherein the damper (32) is disposed at a position overlapping with the pedal portion (34) in the lateral direction.

4. The work vehicle according to claim 3, wherein in an upper portion of a damper plate (31) connecting the arm portion (30) and the damper (32), a plate (37) opposed to a lower surface of the pedal portion (34) is provided, and
an elastic member (38) protruding from the plate (37) toward the pedal portion (34) is provided.

5. The work vehicle according to claim 4, comprising an adjustment mechanism (31A) that adjusts a position of the pedal portion (34) with respect to the arm portion (30).
